# EUROPEAN PATENT APPLICATION

(11) **EP 4 007 057 A1**
(43) Date of publication of application: **01.06.2022**
(21) Application number: 21780037.4
(22) Date of filing: 04.02.2021
(51) Int. Cl.: H01M 50/35, H01M 50/30, H01M 50/502, H01M 50/20

(54) **BATTERY MODULE AND BATTERY PACK INCLUDING SAME**

(30) Priority: 01.04.2020 KR 20200039761
(71) Applicant: LG ENERGY SOLUTION, LTD., Seoul 07335 (KR)
(72) Inventor: CHOI, Jonghwa, Daejeon 34122 (KR); SEONG, Junyeob, Daejeon 34122 (KR); PARK, Myungki, Daejeon 34122 (KR)
(74) Representative: Plasseraud IP
(86) International application number: PCT/KR2021/001482
(87) International publication number: WO 2021/201408

(57) **Abstract**

The present disclosure relates to relates to a battery module including a venting structure and a battery pack including the same. The battery module according to one embodiment of the present disclosure includes a battery cell stack in which a plurality of battery cells are stacked, a module frame that houses the battery cell stack; and an end plate that covers front and rear surfaces of the battery cell stack and is coupled to the module frame, wherein a venting part is formed on the upper surface of the module frame, wherein the battery cells include a cell main body; an electrode lead formed so as to protrude from both ends of the cell main body; and a terrace part formed so as to extend from the cell main body in a direction in which the electrode lead protrudes, and wherein the venting part is formed adjacent to a portion where the terrace part is located rather than to the cell main body.

## Description

### [TECHNICAL FIELD]

### Cross Citation with Related Application(s)

This application claims the benefit of Korean Patent Application No. 10-2020-0039761 filed on April 1, 2020 in the Korean Intellectual Property Office, the disclosure of which is incorporated herein by reference in its entirety.

The present disclosure relates to a battery module and a battery pack including the same, and more particularly, to a battery module having enhanced stability, and a battery pack including the same.

### [BACKGROUND ART]

A secondary battery has attracted much attention as an energy source in various products such as a mobile device and an electric vehicle. The secondary battery is a potent energy resource that can replace the use of existing products using fossil fuels, and is in the spotlight as an environment-friendly energy source because it does not generate by-products due to energy use.

Recently, along with a continuous rise of the necessity for a large-capacity secondary battery structure, including the utilization of the secondary battery as an energy storage source, there is a growing demand for a battery pack of a multi-module structure which is an assembly of battery modules in which a plurality of secondary batteries are connected in series/parallel.

Meanwhile, when a plurality of battery cells are connected in series/parallel to configure a battery pack, it is common to configure a battery module composed of battery cells first, and then configure a battery pack by using at least one of the battery modules and adding other components. Since the battery cells constituting these middle or large-sized battery modules are composed of chargeable/dischargeable secondary batteries, such a high-output and large-capacity secondary battery generates a large amount of heat in a charging and discharging process.

The battery module includes a battery cell stack in which a plurality of battery cells are stacked, a frame for housing the battery cell stack, and end plates for covering the front and rear surfaces of the battery cell stack.

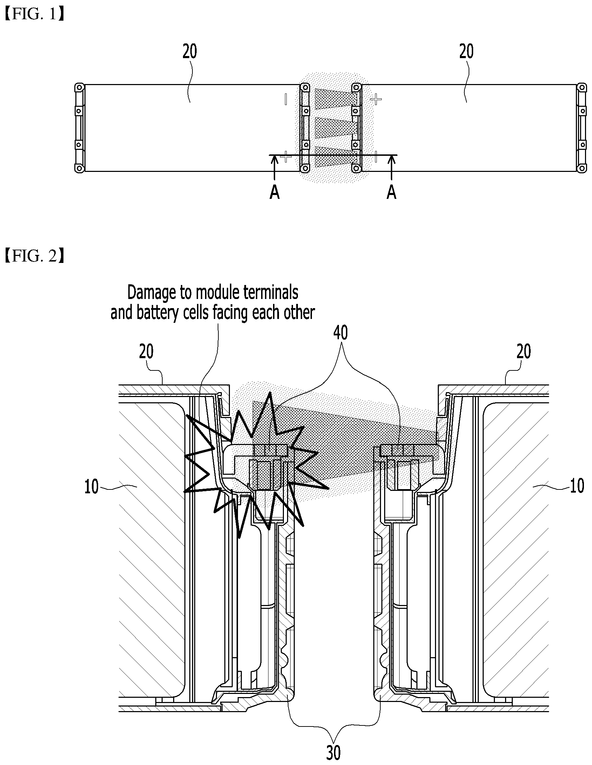

FIG. 1 is a view showing the appearance of a battery module mounted on a conventional battery pack at the time of ignition. FIG. 2 shows section A-A of FIG. 1 and is a view showing the appearance of a flame affecting adjacent battery modules when a battery module mounted on a conventional battery pack ignites.

Referring to FIGS. 1 and 2, the conventional battery module includes a battery cell stack in which a plurality of battery cells 10 are stacked, a frame 20 for housing the battery cell stack, end plates 30 formed on the front and rear surfaces of the battery cell stack, terminal bus bar 40 formed so as to protrude to the outside of the end plates, and the like.

The frame 20 and the end plate 30 can be coupled so as to be sealed by welding. When the frame 20 and the end plate 30 for housing the battery cell stack are coupled in this way, the internal pressure of the battery cells 10 increases during overcharge of the battery module. Thus, when a limit value of the welding strength of the battery cell is exceeded, the high-temperature heat, gas, and flame generated in the battery cells 10 can be discharged to the outside of the battery cell 10.

At this time, the high-temperature heat, gas and flame may be discharged through the openings formed in the end plates 30. However, in a battery pack structure in which a plurality of battery modules are arranged so that the end plates 30 face each other, it may affect a battery module located adjacent to battery modules that eject high-temperature heat, gas and flame. Thereby, the terminal bus bar 40 formed on the end plates 30 of the adjacent battery modules may be damaged, and high-temperature heat, gas, and flame may enter the inside of the battery module via the openings formed in the end plates 30 of the adjacent battery modules to damage the plurality of battery cells 10.

### [DETAILED DESCRIPTION OF THE INVENTION]

### [Technical Problem]

It is an object of the present disclosure to provide a battery module capable of dispersing high-temperature heat and flame discharged when an ignition phenomenon occurs in the battery module, and a battery pack including the same.

The objects of the present disclosure are not limited to the aforementioned objects, and other objects which are not described herein should be clearly understood by those skilled in the art from the following detailed description.

### [Technical Solution]

In order to achieve the above object, according to one embodiment of the present disclosure, there is provided a battery module comprising: a battery cell stack in which a plurality of battery cells are stacked, a module frame that houses the battery cell stack; and an end plate that covers front and rear surfaces of the battery cell stack and is coupled to the module frame, wherein a venting part is formed on the upper surface of the module frame, wherein the battery cells comprise a cell main body; an electrode lead formed so as to protrude from both ends of the cell main body; and a terrace part formed so as to extend from the cell main body in a direction in which the electrode lead protrudes, and wherein the venting part is formed adjacent to a portion where the terrace part is located rather than to the cell main body.

In order to achieve the above object, according to another embodiment of the present disclosure, there is provided a battery pack comprising: a first battery module comprising a first module frame that houses a first battery cell stack, a first end plate that covers the front and rear surfaces of the first battery cell stack and is coupled to the first module frame, a first terrace part assembly formed so as to be extended from a plurality of battery cells of the first battery cell stack, and a first terminal bus bar and a first connector located on the first end plate; and a second battery module adjacent to the first battery module, wherein a first venting part is formed on the upper surface of the first module frame, a portion where the first venting part is formed is formed at a position corresponding to the portion where the first terrace part assembly is located, wherein a second end plate included in the second battery module comprises a second terminal bus bar and a second connector, and wherein the first battery module and the second battery module are disposed such that the first terminal bus bar and the second terminal bus bar face each other, and the first connector and the second connector face each other.

The venting part may be formed at a position corresponding to a portion where the terrace part is located.

The end plate may be formed of two end plates each covering the front and rear surfaces of the battery cell stack, and the venting part may be formed so as to be vented in a direction opposite to an end plate located at a closer position among the two end plates.

The venting part may include an inflow port that is formed on the upper surface of the module frame and faces the battery cell stack; and a discharge port that discharges the gas flown in through the inflow port, wherein the discharge port may be formed in a direction perpendicular to the inflow port.

The venting part may include a connecting part formed between the inflow port and the discharge port to guide the gas flown into the inflow port in a direction in which the discharge port is located, and the upper surface of the connecting part may be formed in an inclined manner.

The venting part may be formed so as to be vented upward relative to the battery cell stack.

The venting part may include an inflow port connected to the battery cell stack and formed upward on an upper surface of the module frame; a discharge port formed in an upward direction to discharge gas flowing in through the inflow port; and a connecting part for connecting the inflow port and the discharge port, and the connecting part may be formed in a direction perpendicular to the inflow and discharge directions of the inflow port and the discharge port.

The connecting part may be formed with an impurity blocking part that blocks impurities entering through the discharge port.

A plurality of the venting parts may be formed at a position corresponding to a portion where the terrace part is located.

The venting parts may be formed on the center and both sides of the upper surface of the module frame, respectively.

The venting part may be formed such that a plurality of square-shaped venting spaces are disposed on the upper surface of the module frame.

The venting part may be formed by a hole structure which is obliquely penetrated from the upper surface of the module frame.

The venting part may be formed so as to penetrate obliquely in a direction of an end plate located farther from the venting part among the two end plates formed on the front and rear surfaces of the battery cell stack.

The first terminal bus bar and the second terminal bus bar each may be have an opening formed at one side facing each other, and the first connector and the second connector each may have an opening formed at one side facing each other.

The first venting part may be formed so as to discharge gas in a direction opposite to a direction in which the second battery module is located.

### [ADVANTAGEOUS EFFECTS]

A battery module and a battery pack including the same according to an embodiment of the present disclosure can disperse high-temperature heat, gas, and flame generated at the time of ignition of the battery module through a venting part formed on the upper surface of the module frame, thereby minimizing a damage to the terminal bus bars of the battery module and the portions of plural battery cells facing the battery module.

The effects of the present disclosure are not limited to the effects mentioned above and additional other effects not described above will be clearly understood from the description of the appended claims by those skilled in the art.

### [BRIEF DESCRIPTION OF THE DRAWINGS]

FIG. 1 is a view showing the appearance of a battery module mounted on a conventional battery pack at the time of ignition.
FIG. 2 shows a section taken along line A-A in FIG. 1 and is a view showing the appearance of a flame affecting adjacent battery modules when a battery module mounted on a conventional battery pack ignites.
FIG. 3 is an exploded perspective view showing a battery module according to an embodiment of the present disclosure.
FIG. 4 is a perspective view showing a state in which the battery module of FIG. 3 is coupled and a venting part is formed in the battery module.
FIG. 5 is a view showing a state in which battery modules are arranged in a battery pack in accordance with an embodiment of the present disclosure, and a state in which high-temperature heat, gas, and flame are discharged from a venting part of the battery module.
FIG. 6 shows a section taken along line B-B of FIG. 5, and is a cross-sectional view showing a state in which high-temperature heat, gas, and flame are discharged from a venting part of a battery module in a battery pack according to an embodiment of the present disclosure.
FIG. 7 is a view showing the appearance of a venting part in a battery module according to another embodiment of the present disclosure.
FIG. 8 is a cross-sectional view showing a state in which high-temperature heat, gas, and flame are discharged from a venting part of the battery module, in the battery pack including the battery module of FIG. 7.
FIG. 9 is a view showing a venting part of a battery module according to another embodiment of the present disclosure.
FIG. 10 is a view showing a venting part of a battery module according to another embodiment of the present disclosure.
FIG. 11 is a view showing a venting part of a battery module according to another embodiment of the present disclosure.

### [DETAILED DESCRIPTION OF THE EMBODIMENTS]

It should be appreciated that the exemplary embodiments, which will be described below, are illustratively described to help understand the present disclosure, and the present disclosure may be variously modified to be carried out differently from the exemplary embodiments described herein. However, in the description of the present disclosure, the specific descriptions and illustrations of publicly known functions or constituent elements will be omitted when it is determined that the specific descriptions and illustrations may unnecessarily obscure the subject matter of the present disclosure. In addition, in order to help understand the present disclosure, the accompanying drawings are not illustrated based on actual scales, but parts of the constituent elements may be exaggerated in size.

As used herein, terms such as first, second, and the like may be used to describe various components, and the components are not limited by the terms. The terms are used only to discriminate one component from another component.

Further, the terms used herein are used only to describe specific exemplary embodiments, and are not intended to limit the scope of the present disclosure. A singular expression includes a plural expression unless they have definitely opposite meanings in the context. It should be understood that the terms "comprise", "include", and "have" as used herein are intended to designate the presence of stated features, numbers, steps, constitutional elements, movements, parts or combinations thereof, but it should be understood that they do not preclude a possibility of existence or addition of one or more other features, numbers, steps, movements, constitutional elements, parts or combinations thereof.

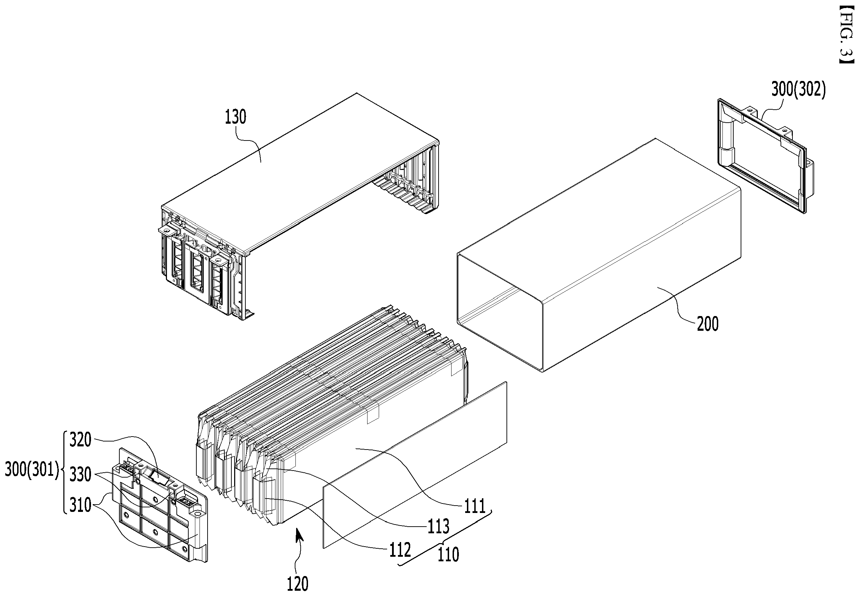

Hereinafter, a battery module in which a venting part is formed in accordance with an embodiment of the present disclosure will be described with reference to FIGS. 3 to 6.

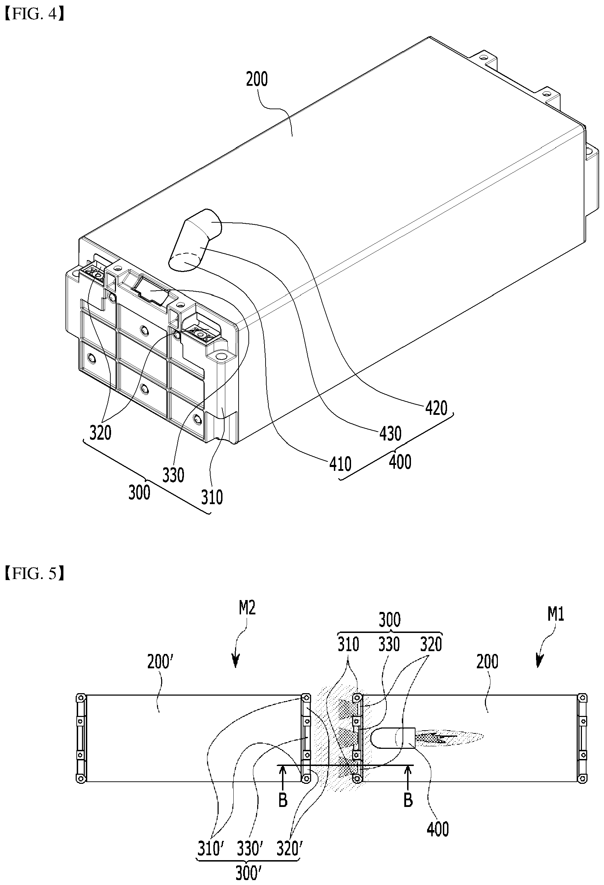

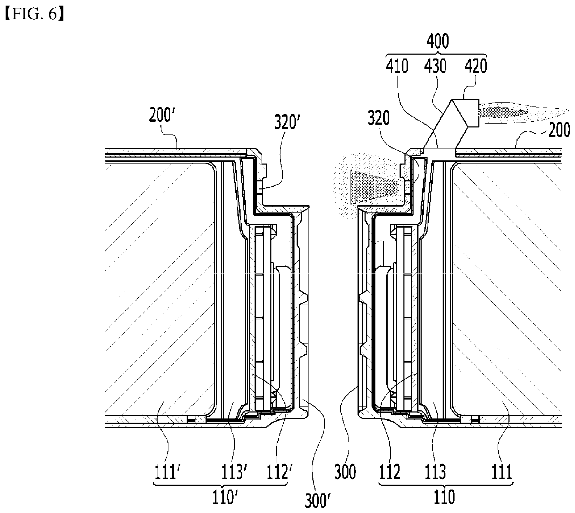

FIG. 3 is an exploded perspective view showing a battery module according to an embodiment of the present disclosure. FIG. 4 is a perspective view showing a state in which the battery module of FIG. 3 is coupled and a venting part is formed in the battery module. FIG. 5 is a view showing a state in which battery modules are arranged in a battery pack in accordance with an embodiment of the present disclosure, and a state in which high-temperature heat, gas, and flame are discharged from a venting part of the battery module. FIG. 6 shows a section taken along line B-B of FIG. 5 and is a cross-sectional view showing a state in which high-temperature heat, gas, and flame are discharged from a venting part of a battery module in a battery pack according to an embodiment of the present disclosure.

Referring to FIGS. 3 to 6, a battery module according to an embodiment of the present disclosure includes a battery cell stack 120 in which a plurality of battery cells 110 are stacked, a module frame 200 that is formed of upper, lower left and right surfaces to house the battery cell stack 120, and first and second end plates 300 each covering the front and rear surfaces of the battery cell stack 120 and including a module mounting part 310, wherein a venting part 400 for discharging gas generated from the plurality of battery cells 110 to the outside is formed on the upper surface of the module frame 200.

The battery cell 110 includes a cell main body 111, electrode leads 112 formed to protrude from both ends of the cell main body 111, and a terrace part 113 formed to extend from the cell main body 111 in the direction in which the electrode leads 112 protrude. The venting part 400 according to the embodiment of the disclosure can be formed adjacent to a portion where the terrace part 113 is located rather than to the cell main body 111, thereby immediately discharging high-temperature heat, gas, and flame to the outside of the battery module 100. For example, the venting part 400 may be formed at a position corresponding to the terrace part 113.

The venting part 400 may be formed to discharge gas in a direction opposite to an end plate located at a closer portion among the first and second end plates 300.

The battery cell 110 is a secondary battery and may be configured as a pouch-type secondary battery. Such a battery cell 110 may be composed of a plurality of cells, and the plurality of battery cells 110 may be stacked together so as to be electrically connected to each other, thereby forming a battery cell stack 120. Each of the plurality of battery cells 110 may include an electrode assembly, a cell main body 111 for housing the electrode assembly, and an electrode lead 112 formed protrusively at both ends from the electrode assembly.

The electrode assembly may be composed of a positive electrode plate, a negative electrode plate, a separator and the like. The cell main body 111 is for packaging the electrode assembly and may be formed of a laminate sheet including a resin layer and a metal layer.

A terrace part 113 formed to extend from the cell main body 111 in the direction in which the electrode leads 112 protrude is included between the electrode lead 112 and the cell main body 111. Specifically, the terrace part 113 formed to extend from a cell case covering the cell main body 111 may be formed by being sealed at its top end. The terrace part 113 may be formed so as to surround the electrode lead 112 that is formed to extend from the cell main body 111. The upper plate 130 is located on the upper side of the battery cell stack 120 and may connect bus bar frames formed on the front and rear surfaces of the battery cell stack.

The module frame 200 may be formed so as to house the battery cell stack 120 and a bus bar frame coupled thereto on the upper, lower, left and right surfaces of the battery cell stack 120. A thermally conductive resin may be injected between the lower end of the battery cell stack 120 and the lower surface of the module frame 200, and a thermally conductive resin layer may be formed between the lower surface of the battery cell stack 120 and the lower surface of the module frame 200 through the injected thermally conductive resin. Through the module frame 200, the battery cell stack 120 housed inside the module frame 200 and the electrical components connected thereto may be protected from an external physical impact.

The end plates 300 are formed so as to cover the front and rear surfaces of the battery cell stack 120. The end plates 300 can protect the bus bar frame and various electrical components connected thereto from external impacts, and includes a module mounting part 310 that can mount the battery module on the battery pack. The end plates 300 are formed with a terminal bus bar opening and a connector opening for connecting the terminal bus bar and connector formed on the bus bar frame to the outside, and the gas generated from the battery cell can be discharged to the outside through the openings. The end plate 300 and the module frame 200 can be coupled by welding, and the plurality of battery cells 110 located inside the module frame 200 and the end plate 300 can be blocked from being connected to the outside except for the above-mentioned openings, through the coupling structure of the end plate 300 and the module frame 200 sealed by welding.

According to an embodiment of the present disclosure, the venting part 400 may be formed on the upper surface of the module frame 200. The venting part 400 is formed at a position corresponding to the portion where the terrace part 113 is located, and when the portion of the sealed terrace part 113 discharges high-temperature heat, gas and flame while being unsealed due to a change in the pressure inside the battery module, the high-temperature heat, gas, and flame can be immediately discharged to the outside through the venting part 400 formed at a position corresponding to the portion where the terrace part 113 is located.

Further, conventionally, since discharge can be performed only through the openings formed in the end plates 300, the discharge path inside the battery module can be diversified, thereby preventing a phenomenon in which the discharge is concentrated only to a part of the battery module at the time of ignition, and dispersing the discharge of heat, gases and flame.

Further, the venting part 400 is formed so as to be vented in a direction opposite to an end plate that is located at a closer position among the first and second end plates 300 formed on each of the front and rear surfaces of the battery cell stack 120. That is, the end plate formed at a portion adjacent to the electrode lead 112 that is connected to the terrace part 113 formed at a position corresponding to the position of the venting portion 400 is closer than the end plate located at the opposite portion relative to the battery cell stack. Thus, when it is vented in the direction of the adjacent end plate, high-temperature heat, gas, and flame can be discharged to other battery module adjacent to the end plate located in close proximity, thereby causing damage to the other battery module. Therefore, the venting direction of the venting part is formed so as to be vented in a direction in which the end plate located at a relatively distant part is disposed, thereby being able to minimize damage to other adjacent battery modules.

The venting part 400 according to an embodiment of the present disclosure includes an inflow port 410 formed on the upper surface of the module frame 200 and connected to the battery cell stack 120, and a discharge port 420 for discharging the gas flown in through the inflow port 410, and the discharge port 420 may be formed in a direction perpendicular to the inflow port 410. Further, the venting part 400 includes a connecting part 430 that is formed between the inflow port 410 and the discharge port 420 to guide the gas flown into the inflow port 410 in the direction in which the discharge port 420 is located, and the upper surface of the connecting part 430 may be formed in an inclined manner.

The discharge port 420 can be formed in a direction perpendicular to the inflow port 410 and the upper surface of the module frame 200, thereby preventing a phenomenon in which impurities suspended in the air enter the inside of the discharge port due to gravity. Further, the upper surface of the connecting part 430 is formed in an inclined manner toward the discharge port, so that the high-temperature heat, gas, and flame flowing into the inflow port 410 can be changed in direction through the connecting part 430 to be naturally discharged through the discharge port 420.

The battery module described above may be included in the battery pack. The battery pack according to an embodiment of the present disclosure includes a first battery module M1 comprising a first battery module frame 200 that houses a first battery cell stack 120, a first end plate 300 that covers the front and rear surfaces of the first battery cell stack 120 and is coupled to the first module frame 200, a first terrace part assembly 112 formed so as to be extended from a plurality of battery cells of the first battery cell stack 120, and a first terminal bus bar 320 and a first connector 330 located on the first end plate 300; and a second battery module M2 adjacent to the first battery module M1. At this time, the first terrace part assembly 113 may be configured such that terrace parts formed to extend from the plurality of stacked battery cells 110 are gathered to form an assembly.

According to an embodiment of the present disclosure, a first venting part 400 is formed on the upper surface of the first module frame 200, the portion where the first venting part 400 is formed is formed at a position corresponding to a portion where the first terrace part assembly 113 is located, and a second end plate 300' included in the second battery module M2 includes a second terminal bus bar 320' and a second connector 330'. The first venting part 400 may be formed so as to discharge gas in a direction opposite to the direction in which the second battery module M2 is located.

The first battery module M1 and the second battery module M2 are arranged such that a first terminal bus bar 320 and a second terminal bus bar 320' face each other, and a first connector 330 and a second connector 330' face each other. At this time, each of the first terminal bus bar 320 and the second terminal bus bar 320' may have an opening formed on one side facing each other, and each of the first connector 330 and the second connector 330' may have an opening formed at one side facing each other.

The high-temperature heat, gas, and flame formed in the first battery module M1 can be discharged to the second terminal bus bar 320' and the second connector 330' of the second battery module M2 disposed so as to face each other through the first terminal bus bar 320 and the first connector 330 formed with openings. Thus, the second terminal bus bar 320' and the second connector 330' formed in the second battery module M2 may be damaged due to high-temperature heat, gas, and flame.

Further, high-temperature heat, gas, and flame may pass through the openings formed in the second terminal bus bar 320' and the second connector 330' to damage the battery cell stack 110' inside the second battery module M2. According to an embodiment of the present disclosure, through the first venting part 400 formed in the first battery module M1, it is possible to disperse and discharge high-temperature heat, gas, and flame generated from the first terrace part assembly 113 together with the opening formed in the first terminal bus bar 320 and the first connector 330, whereby damage transferring to the second terminal bus bar 320' and the second connector 330' arranged so as to face the first terminal bus bar 320 and the first connector 330 can be minimized.

The second battery module M2 includes a second module frame 200' into which the second battery cell stack is inserted, and a second end plate 300' that covers the front and rear surfaces of the second battery cell stack and is coupled to the second module frame, and a second venting part may be formed on the upper surface of the second module frame 200'. At this time, the discharge port of the second venting part may direct to a different direction from the discharge port of the first venting part 400.

Moreover, the second battery module M2 further includes a second terrace part assembly 113' formed to extend from the plurality of battery cells of the second battery cell stack, and the portion where the second venting part is formed may be formed at a position corresponding to a position where the second terrace part assembly 113' is formed.

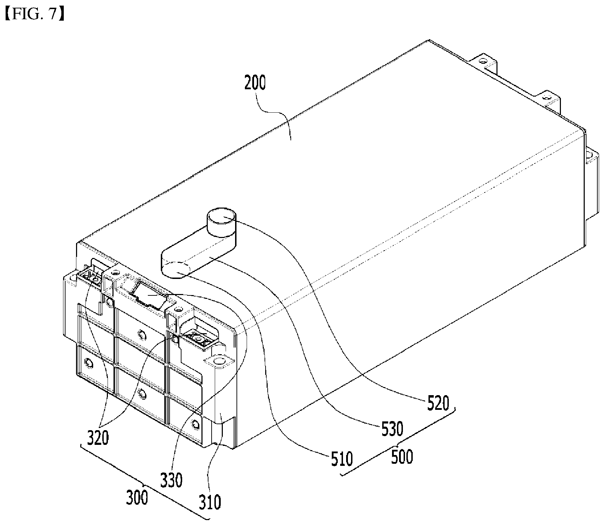

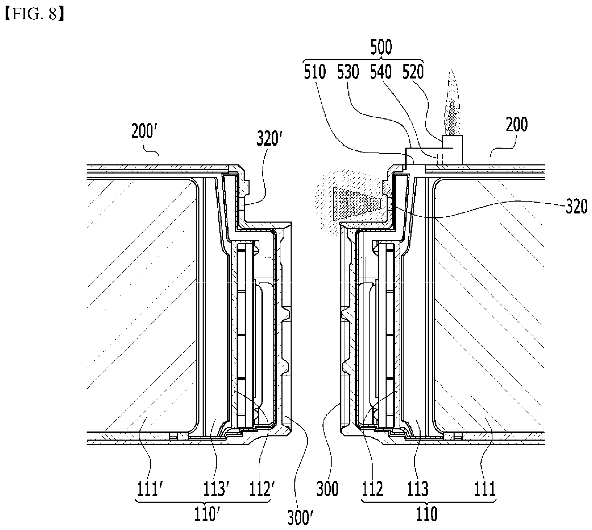

Hereinafter, a battery module in which a venting part 500 is formed in accordance with another embodiment of the present disclosure will be described with reference to FIGS. 7 and 8.

FIG. 7 is a view showing the appearance of a venting part in a battery module according to another embodiment of the present disclosure. FIG. 8 is a cross-sectional view showing a venting part of the battery module in the battery pack including the battery module of FIG. 7.

As shown in FIGS. 7 and 8, the venting part 500 according to the embodiment of the disclosure may be formed so as to be vented in an upward direction relative to the battery cell stack 120. The venting part 500 includes an inflow port 510 connected to the battery cell stack 120 and formed upward on the upper surface of the module frame 200, a discharge port 520 formed in the upward direction to discharge the gas flowing in through the inflow port, and a connecting part 530 for connecting the inflow port 510 and the discharge port 520, wherein the connecting part 530 may be formed in a direction perpendicular to the inflow and discharge directions of the inflow port 510 and the discharge port 520.

The venting part 500 can discharge high-temperature heat, gas, and flame inside the battery module toward the upper side of the battery module, thereby minimizing damage to other battery modules arranged in a manner that end plates face each other. However, the discharge port 520 is formed toward the upward direction and impurities in the air may enter the discharge port 520 by gravity. Thus, the connecting part 530 can be formed in a direction perpendicular to the discharge port 520, thereby minimizing a phenomenon in which impurities flowing into the discharge port 520 flows into the inside of the battery module through the inflow port 510.

Further, an impurity blocking part 540 for blocking impurities entering through the discharge port 520 is formed on the connecting part 530, thereby being able to prevent impurities from entering the portion of the inflow port 510 through the connection part 530 from the portion of the discharge port 520.

The battery module described above may be included in the battery pack. The battery pack according to an embodiment of the present disclosure includes a first battery module M1 comprising a first battery module 200 that houses a first battery cell stack 120, a first end plate 300 that covers the front and rear surfaces of the first battery cell stack 120 and is coupled to the first module frame 200, a first terrace part assembly 112 formed so as to be extended from a plurality of battery cells of the first battery cell stack 120, and a first terminal bus bar 320 and a first connector 330 located on the first end plate 300; and a second battery module M2 adjacent to the first battery module M1. At this time, the first terrace part assembly 113 may be configured such that the terrace parts formed to extend from the plurality of stacked battery cells 110 are gathered to form an assembly.

According to an embodiment of the present disclosure, a first venting part 500 is formed on the upper surface of the first module frame 200, the portion where the first venting part 500 is formed is formed at a position corresponding to a portion where the first terrace part assembly 113 is located, and a second end plate 300' included in the second battery module M2 includes a second terminal bus bar 320' and a second connector 330 '. At this time, the first battery module M1 and the second battery module M2 are arranged such that a first terminal bus bar 320 and a second terminal bus bar 320' face each other, and a first connector 330 and a second connector 330' face each other.

The contents other than the above-mentioned description in relation to the battery pack are the same as those described for the battery pack in which the first venting part 400 is formed in accordance with an embodiment of the present disclosure.

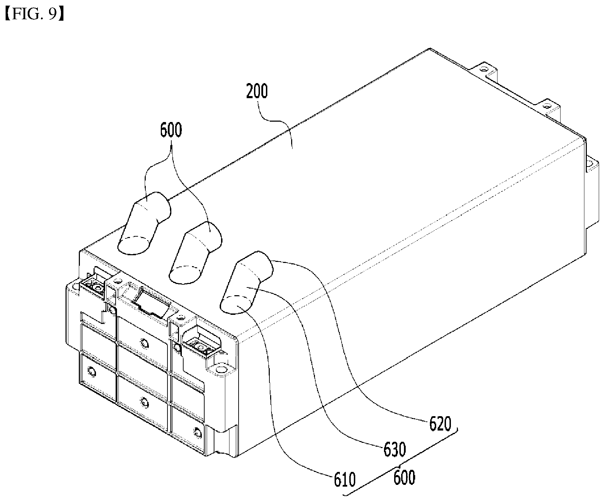

Hereinafter, a battery module in which the venting part 600 is formed in accordance with another embodiment of the present disclosure will be described with reference to FIG. 9.

FIG. 9 is a view showing a venting part of a battery module according to another embodiment of the present disclosure.

As shown in FIG. 9, the venting part 600 according to the embodiment of the disclosure may be formed at a position where the plurality of venting parts 600 correspond to a portion where the terrace part is located. Each venting part 600 may be formed at both ends and the center of the upper surface of the module frame 200, respectively. For example, since high-temperature heat, gas, and flame may be generated locally from a specific battery cell in a plurality of battery cells, such as generating high-temperature heat, gas, and flame in the outermost battery cells of the battery cell stack, a plurality of venting parts 600 are disposed along the portion where the terrace part is formed as shown in FIGS. 3 and 6, so that the high-temperature heat, gas, and flame generated from the battery cell located in a specific portion can be quickly discharged to the outside through the venting part 600 located closest to the corresponding battery cells. According to the embodiment of the disclosure, the venting part 600 is formed on the center and both sides of the upper surface of the module frame 200, respectively, so that high-temperature heat, gas, and flame generated from the battery cells adjacent to each venting part 600 may be discharged to the outside.

The venting part 600 according to the embodiment of the disclosure includes an inflow port 610 formed on the upper surface of the module frame 200 and connected to the battery cell stack, and a discharge port 620 for discharging the gas flown in through the inflow port 610, and the discharge port 620 may be formed in a direction perpendicular to the inflow port 610. Further, the venting part 600 includes a connecting part 630 formed between the inflow port 610 and the discharge port 620 to guide the gas flown into the inflow port 610 in the direction in which the discharge port 620 is located, and the upper surface of the connecting part 630 may be formed in an inclined manner.

The discharge port 620 is formed in a direction perpendicular to the inflow port 610 and the upper surface of the module frame 200, thereby being able to prevent a phenomenon in which impurities suspended in the air enter the inside of the discharge port 620 due to gravity. In addition, the upper surface of the connecting part 630 is formed in an inclined manner toward the discharge port, so that the high-temperature heat, gas, and flame flown into the inflow port 610 may be changed in direction through the connecting part 630 and discharged naturally through the discharge part 620.

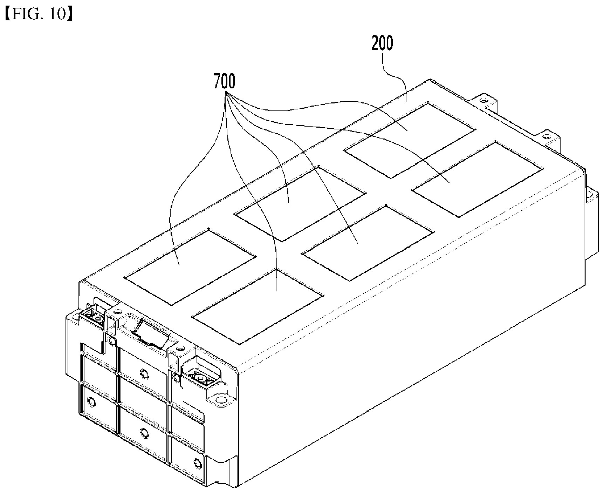

Hereinafter, a battery module in which the venting part 700 is formed in accordance with another embodiment of the present disclosure will be described with reference to FIG. 10.

FIG. 10 is a view showing a venting part of a battery module according to another embodiment of the present disclosure.

Referring to FIG. 10, the venting unit 700 according to the embodiment of the disclosure may be formed such that a plurality of square-shaped venting spaces are disposed on the upper surface of the module frame 200. Ignition phenomena may simultaneously and frequently generate from a plurality of battery cells and thus, similarly to the venting part 700 according to another embodiment of the present disclosure, it can be formed such that a plurality of square-shaped venting spaces are disposed on the upper surface of the module frame 200, thereby being able to quickly discharge a considerable amount of gas, heat and flam to the outside.

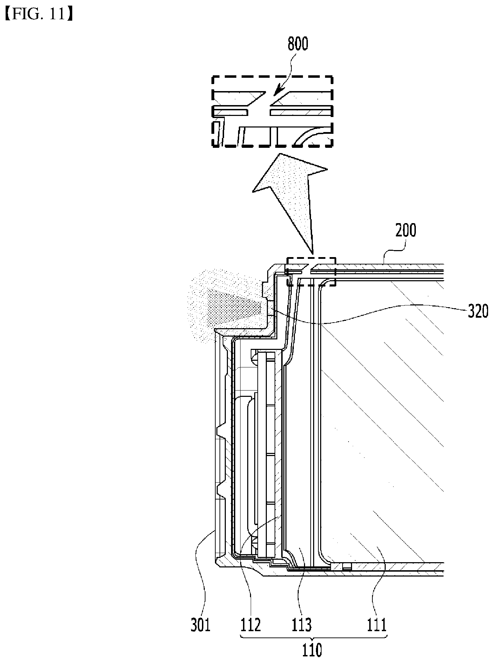

Hereinafter, a battery module in which the venting part 800 is formed in accordance with another embodiment of the present disclosure will be described with reference to FIGS. 3 and 11.

FIG. 11 is a view showing a venting part of a battery module according to another embodiment of the present disclosure.

Referring to FIGS. 3 and 11, the venting part 800 formed in the battery module in accordance with the embodiment of the disclosure may be formed so as to discharge gas toward an end plate located farther from the venting part 800 of two end plates formed at both ends of the battery module. At this time, the venting part 800 may have a hole structure formed on the upper surface of the module frame 200, and further, may have a hole structure that is obliquely penetrated so as to have an inclination.

The venting part 800 may be formed obliquely in the direction of an end plate located farther from the venting part 800 among the two end plates 301 and 302 formed on the front and rear surfaces of the battery cell stack 120. Specifically, the inner inflow port of the obliquely penetrated venting part 800 is formed closer to the 1-1 end plate 301 than to the outer discharge port, and the outer discharge port may be formed closer to the 1-2 end plate 302 than to the inner inflow port.

Through the above structure, it is possible to naturally provide directionality to heat or gas discharged through the venting unit 800. That is, it can be induced so as to discharge gas in the direction of the 1-2 end plate 302 located further away. Thereby, it is possible to prevent damage to other battery modules adjacent to the 1-1 end plate 301.

In addition, the venting part 800 according to the embodiment of the disclosure has the advantages in that it has a through-hole structure, does not require a separate additional space, and can provide the directionality of being easily discharged only by penetrating the module frame 200.

The above-mentioned battery pack may have a structure in which one or more of the battery modules according to the present embodiment are gathered, and packed together with a battery management system (BMS) and a cooling device that control and manage battery's temperature, voltage, etc.

The battery pack can be applied to various devices. Such a device may be applied to a transportation means such as an electric bicycle, an electric vehicle, or a hybrid vehicle, but the present disclosure is not limited thereto, and is applicable to various devices that can use a battery module, which also belongs to the scope of the present disclosure.

Although the invention has been shown and described with reference to the preferred embodiments, the scope of the present disclosure is not limited thereto, and numerous other modifications and embodiments can be devised by those skilled in the art that will fall within the spirit and scope of the principles of the invention described in the appended claims. Further, these modified embodiments should not be understood individually from the technical spirit or perspective of the present disclosure.

### [Description of Reference Numerals]

110: battery cell
111: cell main body
112: electrode lead
113: terrace part (first terrace part assembly)
113': terrace part (second terrace part assembly)
120: battery cell stack
130: upper plate
200: first module frame (module frame)
200': second module frame
300: first end plate (end plate)
301: 1-1 end plate
302: 1-2 end plate
300': second end plate
310: module mounting part
320: first terminal bus bar
320': second terminal bus bar
330: first connector
330': second connector
400, 500, 600, 700, 800: venting part (first venting part)
410, 510, 610: inflow port
420, 520, 620: discharge port
430, 530, 630: connecting part
540: impurity blocking part

## Claims

1. A battery module comprising:
a battery cell stack in which a plurality of battery cells are stacked,
a module frame that houses the battery cell stack; and
an end plate that covers front and rear surfaces of the battery cell stack and is coupled to the module frame,
wherein a venting part is formed on the upper surface of the module frame,
wherein the battery cells comprise,
a cell main body;
an electrode lead formed so as to protrude from both ends of the cell main body; and
a terrace part formed so as to extend from the cell main body in a direction in which the electrode lead protrudes, and
wherein the venting part is formed adjacent to a portion where the terrace part is located rather than to the cell main body.

2. The battery module according to claim 1,
wherein the venting part is formed at a position corresponding to a portion where the terrace part is located.

3. The battery module according to claim 1,
wherein the end plate is formed of two end plates each covering the front and rear surfaces of the battery cell stack, and
the venting part is formed so as to be vented in a direction opposite to an end plate located at a closer position among the two end plates.

4. The battery module according to claim 1,
wherein the venting part comprises,
an inflow port that is formed on the upper surface of the module frame and faces the battery cell stack; and
a discharge port that discharges the gas flown in through the inflow port, and
the discharge port is formed in a direction perpendicular to the inflow port.

5. The battery module according to claim 4,
wherein the venting part comprises,
a connecting part formed between the inflow port and the discharge port to guide the gas flown into the inflow port in a direction in which the discharge port is located, and
the upper surface of the connecting part is formed in an inclined manner.

6. The battery module according to claim 1,
wherein the venting part is formed so as to be vented upward relative to the battery cell stack.

7. The battery module according to claim 6,
wherein the venting part comprises,
an inflow port connected to the battery cell stack and formed upward on an upper surface of the module frame;
a discharge port formed in an upward direction to discharge gas flowing in through the inflow port; and
a connecting part for connecting the inflow port and the discharge port,
wherein the connecting part is formed in a direction perpendicular to the inflow and discharge directions of the inflow port and the discharge port.

8. The battery module according to claim 7,
wherein the connecting part is formed with an impurity blocking part that blocks impurities entering through the discharge port.

9. The battery module according to claim 1,
wherein a plurality of the venting parts are formed at a position corresponding to a portion where the terrace part is located.

10. The battery module according to claim 9,
wherein the venting parts are formed on the center and both sides of the upper surface of the module frame, respectively.

11. The battery module according to claim 1,
wherein the venting part is formed such that a plurality of square-shaped venting spaces are disposed on the upper surface of the module frame.

12. The battery module according to claim 1,
wherein the venting part is formed by a hole structure which is obliquely penetrated from the upper surface of the module frame.

13. The battery module according to claim 12,
wherein the venting part is formed so as to penetrate obliquely in a direction of an end plate located farther from the venting part among the two end plates formed on the front and rear surfaces of the battery cell stack.

14. A battery pack comprising:
a first battery module comprising a first module frame that houses a first battery cell stack, a first end plate that covers the front and rear surfaces of the first battery cell stack and is coupled to the first module frame, a first terrace part assembly formed so as to be extended from a plurality of battery cells of the first battery cell stack, and a first terminal bus bar and a first connector located on the first end plate; and
a second battery module adjacent to the first battery module,
wherein a first venting part is formed on the upper surface of the first module frame, a portion where the first venting part is formed is formed at a position corresponding to a portion where the first terrace part assembly is located,
wherein a second end plate included in the second battery module comprises a second terminal bus bar and a second connector, and
wherein the first battery module and the second battery module are disposed such that the first terminal bus bar and the second terminal bus bar face each other, and the first connector and the second connector face each other.

15. The battery pack according to claim 14,
wherein the first terminal bus bar and the second terminal bus bar each have an opening formed at one side facing each other, and the first connector and the second connector each have an opening formed at one side facing each other.

16. The battery pack according to claim 14,
wherein the first venting part is formed so as to discharge gas in a direction opposite to a direction in which the second battery module is located.
